## Europäisches Patentamt

## European Patent Office

## Office européen des brevets

(19)

(11) Veröffentlichungsnummer: **0 309 508**
**B1**

(12) **EUROPÄISCHE PATENTSCHRIFT**

(45) Veröffentlichungstag der Patentschrift: **27.12.90**

(21) Anmeldenummer: **88902781.9**

(22) Anmeldetag: **11.04.88**

(86) Internationale Anmeldenummer:
**PCT/CH88/00075**

(87) Internationale Veröffentlichungsnummer:
**WO 88/08095 20.10.88 Gazette 88/23**

(51) Int. Cl.⁵: **F 16 H 21/30** // F02B41/04,
F02B75/32

(54) **KURBELTRIEB.**

(30) Priorität: **13.04.87 CH 1414/87**

(73) Patentinhaber: **FREY, Heinz**
**Hirtenhofstrasse 18**
**CH-6005 Luzern (CH)**

(72) Erfinder: **FREY, Heinz**
**Hirtenhofstrasse 18**
**CH-6005 Luzern (CH)**

(74) Vertreter: **Justitz-Wormser, Daisy P., Dipl.-**
**Chem. et al**
**PATENTANWALTS-BUREAU ISLER AG Postfach**
**6940 Walchestrasse 23**
**CH-8023 Zürich (CH)**

(43) Veröffentlichungstag der Anmeldung:
**05.04.89 Patentblatt 89/14**

(45) Bekanntmachung des Hinweises auf die
Patenterteilung:
**27.12.90 Patentblatt 90/52**

(84) Benannte Vertragsstaaten:
**AT CH DE FR GB IT LI SE**

(56) Entgegenhaltungen:
**CH-A- 290 688**
**DE-A-3 634 536**
**DE-C- 898 373**
**FR-A- 914 211**
**FR-A-1 241 833**
**GB-A- 460 936**
**US-A-2 369 747**
**US-A-4 073 196**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Ein Kurbeltrieb gemäss Oberbegriff des Anspruchs 1 ist aus der US—A—2 369 747 bekannt. Eine Kurbel ist um eine Kurbelachse in einem Gehäuse drehbar. Auf der Kurbel ist ein Planetenrad um eine Planetenradachse drehbar gelagert. Das Planetenrad kämmt mit einem gehäusefesten Sonnenrad gleichen Durchmessers. Exzentrisch zur Planetenradachse ist auf dem Planetenrad der Drehzapfen eines Pleullagers einer mit einem Kolben verbundenen Pleuelstange montiert. Durch diese Ausbildung beschreibt das Pleuellager eine herzförmige Bahn. Im oberen Totpunkt der Kolbenbewegung kann damit die Kolbenbeschleunigung reduziert werden.

Der vorliegenden Erfindung liegt die Aufgabe zugrunde, einen Kurbeltrieb der eingangs genannten Art derart auszubilden, dass die Beschleunigungen in Pleuellängsrichtung in beiden Totpunkten reduziert werden können. Diese Aufgabe wird durch die kennzeichnenden Merkmale des Anspruchs 1 gelöst. Nachfolgend wird ein Ausführungsbeispiel der Erfindung anhand Zeichnung erläutert. Darin zeigen:

Fig. 1 eine Seitenansicht einer ersten Ausführrungsform,

Fig. 2 einen Schnitt längs der Linie II—II in Fig. 1, und

Fig. 3 ein Diagramm der Wirkungsweise des Kurbeltriebs nach Fig. 1 und 2.

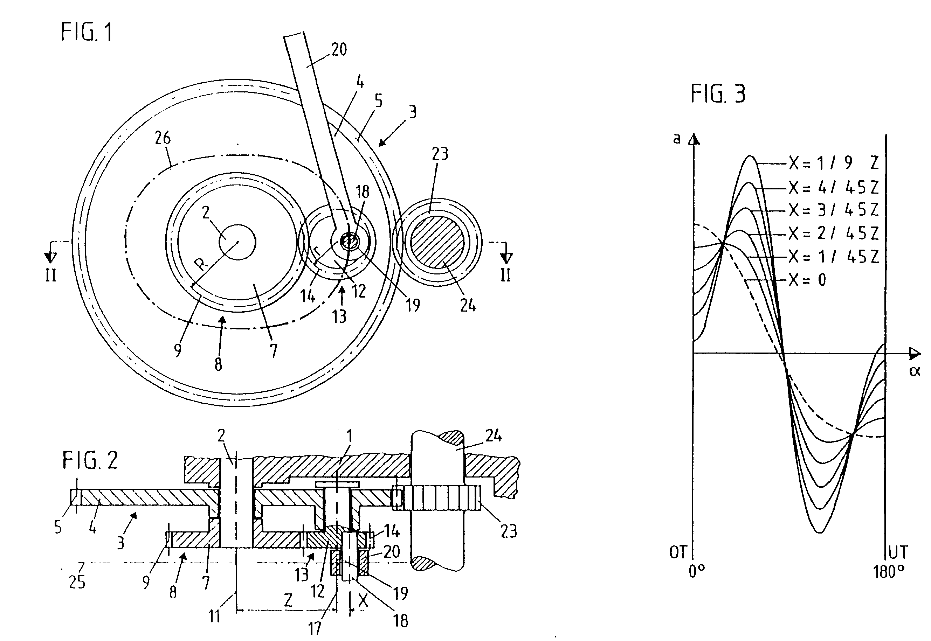

Bei der Ausführungsform nach Fig. 1 und 2 ist in einem Gehäuse 1 auf einem zylindrischen Zapfen 2 eine als Kurbel 3 wirkende Scheibe 4 mit einer Aussenverzahnung 5 drehbar gelagert. Mit dem Zapfen 2 ist ein koaxiales, als Zahnrad 7 ausgebildetes Sonnenrad 8 mit einer Aussenverzahnung 9 starr verbunden. Der Zapfen 2 ist gegenüber dem Gehäuse 1 begrenzt verdrehbar und arretierbar. Auf der Kurbelscheibe 4 ist exzentrisch und parallel zur Achse 11 des Zapfens 2 ein als Zahnrad 12 ausgebildetes Planetenrad 13 mit einer weiteren Aussenverzahnung 14 drehbar gelagert. Die Verzahnungen 9, 14 kämmen miteinander. Der Teilkreisradius r des Planetenrades 13 ist halb so gross wie der Teilkreisradius R des Sonnenrades 8. Mit einer Exzentrizität X exzentrisch zur Achse 17 des Planetenrades 13 sitzt ein achsparalleler Bolzen 18 im Planetenrad 13. Auf dem Bolzen 18 ist das Pleuellager 19 einer Pleuelstange 20 drehbar. Die Aussenverzahnung 5 kämmt mit einem Ritzel 23 einer achsparallelen Wellen 24. Beim Einsatz des Kurbeltriebes in einem Kolbenmotor kann die Welle 24 die Abtriebswelle sein. Zweckmässig wird der in Fig. 2 schematisch dargestellte Schnitt noch an der senkrecht zur Achse 11 verlaufenden Mittelebene 25 gespiegelt, so dass also zwei voneinander beabstandete Kurbelscheiben 4 um die Achse 11 drehbar sind und mit je einem zugehörigen Ritzel 23 auf der Welle 24 kämmen. Die Kurbelscheiben 4 tragen je ein Planetenrad 13. Diese Planetenräder 13 sind mit je einem Sonnenrad 7 im Eingriff und über den Bolzen 18 starr miteinander verbunden. Der besseren Uebersicht wegen sind in Fig. 2 die symmetrisch zur Mittelebene 25 angeordneten Teile weggelassen.

Im Begrieb beschreibt der Bolzen 18 und damit das Pleuellager 19 eine annähernd elliptische Bahn 26 um den Zapfen 2. Durch Wahl der Exzentrizität X des Bolzens 18 auf dem Planetenrad 13 im Verhältnis zum Abstand Z der Achsen 11, 17 voneinander kann die Charakteristik des Kurbeltriebs gegenüber einem herkömmlichen Kurbeltrieb, welchem der Wert X/Z=0 entspricht, stark verändert werden. In Fig. 3 sind als Beispiel die Kolbenbeschleunigungen a bei konstantem Kolbenhub über den Kurbelwinkel a von 180° bei verschiedenen Exzentrizitäten X/Z bis X/Z=1/9 schematisch dargestellt. Wie aus der Figur ersichtlich ist, können die Kolbenbeschleunigungen am oberen Totpunkt auf beliebig kleine Werte abgebaut werden. Dementsprechend steht bei einem Kolbenverbrennungsmotor am oberen Totpunkt für die Zündung ein relativ grosser Drehwinkel zur Verfügung. Die Verbrennung kann dadurch optimiert und vollständig abgeschlossen werden, bevor die Expansion beginnt. Durch die entsprechend raschere Expansion werden die Wandwärmeverluste vermindert, also die Expansion mehr der adiabatischen angenähert. Im unteren Totpunkt steht der Kolben über einem Winkel von etwa 60° praktisch still.

Dadurch steht viel Zeit für die Ventilsteuerung und die Spülung zur Verfügung. Die Ventilverluste werden dadurch minimiert. Der genutzte Arbeitshub wird länger. Diese verbessert die Energieausnützung. Durch Verdrehen des Zapfens 2 im Gehäuse 1 kann der Kolbenhub auf einfache Weise während des Betriebs eingestellt werden. Dadurch kann z.B. bei Kolbenverbrennungsmotoren die Verdichtung der Drehzahl und Leistung angepasst werden. Dadurch wird der Motor wesentlich elastischer. Der beschreibene Kurbeltrieb ist mechanisch auswuchtbar.

## Patentansprüche

1. Kurbeltrieb insbesondere für Kolbenmaschinen, umfassend eine um ihre Achse (11) drehbar Kurbel (3), ein auf der Kurbel (3) drehbar gelagertes, aussenverzahntes Planetenzahnrad (13), das mit einem gehäusefesten, aussenverzahnten Sonnenzahnrad (8) kämmt, sowie ein Pleuelstange (20) mit einem Pleuellager (19), das um eine am Planetenzahnrad (13) exzentrisch angeordnete Achse (18) drehbar gelagert ist, dadurch gekennzeichnet, dass das Verhältnis des Durchmessers des Sonnenzahnrades (8) zum Durchmesser des Planetenzahnrades (13) 2:1 beträgt, und dass die Exzentrizität (X) der Drehachse (18) des Pleuellagers (19) auf dem Planetenzahnrad (13) höchstens 1/9 des Abstandes (Z) zwischen der Kurbelachse (11) und der Drehachse (17) des Planetenzahnrades (13) beträgt, sodass sich das Pleuellager (19) bei der Drehung der Kurbel (3) auf einer annähernd elliptischen Bahn bewegt.

2. Kurbeltrieb nach Anspruch 1, dadurch gekenneichnet, dass die Kurbel (3) aus zwei koaxialen, voneinander beabstandeten Zahnrädern (4) gleichen Durchmessers besteht, die in einem Gehäuse (1) drehbar gelagert sind und mit zwei starr miteinander verbundenen Ritzeln (23) kämmen, dass in jedem der Kurbelzahnräder (4) je ein Planetenzahnrad (13) drehbar gelagert ist, und dass die beiden zueinander koaxialen Planetenzahnräder (13) über einen exzentrischen, vom Pleuellager (19) umschlossenen Kurbelzapfen (18) starr miteinander verbunden sind und mit je einer von zwei zueinander koaxialen, das Sonnenzahnrad (8) bildenden Zahnrädern (7) kämmen.

3. Kurbeltrieb nach Anspruch 1 oder 2, dadurch gekennzeichnet, dass das Sonnenzahnrad (8) um seine Achse (11 gegenüber einem Gehäuse (1) verdrehbar und arretierbar ist.

**Revendications**

1. Transmission à bielle et manivelle pour machines à piston, comprenant une manivelle (3) tournant autour de son axe (11), une roue dentée planétaire (13) à denture extérieure, montée, de manière rotative, sur la manivelle (3), engrènant avec une roue solaire (8) à denture extérieure, fixée dans le carter, ainsi qu'une bielle (20) à roulement (19) monté de manière à pouvoir tourner sur un axe (18) disposé excentriquement par rapport à la roue dentée planétaire (13), caractérisée en ce que le rapport entre le diamétre de la roue dentée solaire (8) et le diamétre de la roue dentée planétaire (13) est de 2:1 et que l'excentricité (X) de l'axe de rotation (18) du roulement de bielle (19) sur la roue dentée planétaire (13) est de maximum 1/9 de la distance (Z) entre l'axe de manivelle (11) et l'axe de rotation (17) de la roue dentée planétaire (13), de manière que le roulement de bielle (19) se déplace, lors de la rotation de la manivelle (3) suivant une trajectoire approximativement elliptique.

2. Transmission à bielle et manivelle suivant la revendication 1, caractérisée en ce que la manivelle (3) se compose de deux roues dentées (4) de même diamètre, distantes l'une de l'autre, montées, de manière rotative, dans un carter (1) et engrenant avec deux pignons (23) raccordés solidement l'un à l'autre, que, dans chacune des roues dentées de manivelle (4), il est chaque fois monté, de manière rotative, une roue dentée planétaire (13) et que les deux roues dentées planétaires (13), coaxiales l'une par rapport à l'autre, soit solidement raccordées entre elles par un pivot de manivelle (18) excentrique, entouré par le roulement de bielle (19), et engrènent, chacune, avec l'Oune de deux roues dentées (7) coaxiales l'une par rapport à l'autre, formant la roue dentée solaire (8).

3. Transmission à bielle et manivelle suivant la revendication 1 ou 2, caractérisée en ce que la roue dentée solaire (8) peut être déplacée en rotation autour de son axe (11), par rapport au carter 1, et arrêtée.

**Claims**

1. Crank drive, more particularly for piston engines, comprising a crank (3) rotatable about its axis (11), a planet gear wheel (13) having external teeth and rotatably mounted on the crank (3) and engaging with a sun gear wheel (8) having external teeth and fixed to the housing, and a connecting rod (20) with a bearing (19) which is rotatably mounted about a spindle (18) eccentrically arranged on the planet wheel (13) characterised in that the ratio of the diameter of the sun wheel (8) to the diameter of the planet wheel (13) is 2:1, and that the eccentricity X of the rotation spindle (18) of the bearing (19) on the planet wheel (13) is at most one ninth of the spacing (Z) between the crank shaft (11) and the rotation axis (17) of the planet wheel (13), so that as the crank (3) rotates the bearing (19) travels along a substantially elliptical path.

2. Crank drive according to Claim 1, characterised in that the crank (3) consists of two coaxial gear wheels (4) of the same diameter spaced from each other, rotatably mounted in a housing (1) and meshing with two rigidly connected pinions (23), and on each of the crank gear wheels (4) a planet wheel (13) is rotatably mounted, and the two coaxial planet wheels (13) are fixedly connected to each other by means of an eccentric crank pin (18) enclosed by the bearing (19) and each mesh with one or two gear wheels (7) coaxial with one another which form the sun wheel (8).

3. Crank drive according to Claim 1 or 2, characterised in that the sun wheel (8) is rotatable and lockable about its spindle (11) relative to a housing (1).

FIG. 3

X = 1 / 9  Z
X = 4 / 45 Z
X = 3 / 45 Z
X = 2 / 45 Z
X = 1 / 45 Z
X = 0

α

a

OT

UT
0°        180°

FIG.1

FIG.2